# EUROPEAN PATENT APPLICATION

(11) **EP 4 645 731 A1**
(43) Date of publication of application: **05.11.2025**
(21) Application number: 24749742.3
(22) Date of filing: 02.02.2024
(51) Int. Cl.: H04L 1/1812

(54) **COMMUNICATION METHOD AND APPARATUS**

(30) Priority: 03.02.2023 CN 202310106630
(71) Applicant: Huawei Technologies Co., Ltd., Shenzhen, Guangdong 518129 (CN)
(72) Inventor: CHEN, Ying, Shenzhen, Guangdong 518129 (CN); YANG, Ruonan, Shenzhen, Guangdong 518129 (CN); ZHANG, Jiayin, Shenzhen, Guangdong 518129 (CN)
(74) Representative: Pfenning, Meinig & Partner mbB
(86) International application number: PCT/CN2024/075378
(87) International publication number: WO 2024/160263

(57) **Abstract**

This application provides a communication method and apparatus. A terminal device may parse first DCI from a network device based on a parsing manner of DCI, to determine whether to perform HARQ feedback. This indicates that the terminal device may determine, based on DCI, whether to perform HARQ feedback, and does not need to constantly determine, based on an RRC configuration message, whether to perform HARQ feedback, so that HARQ feedback can be more flexible. In addition, a terminal device that does not support RRC reconfiguration may also determine, based on DCI, whether to perform HARQ feedback.

## Description

This application claims priority to Chinese Patent Application No. 202310106630.6, filed with the China National Intellectual Property Administration on February 3, 2023, and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Currently, a network device may send a radio resource control (radio resource control, RRC) configuration message to a terminal device. The RRC configuration message indicates the terminal device whether to perform hybrid automatic repeat request (hybrid automatic repeat request, HARQ) feedback. If the terminal device successfully receives data, the terminal device feeds back an acknowledgment (acknowledgement, ACK) to the network device. If the terminal device fails to receive data, the terminal device feeds back a negative acknowledgement (non-acknowledgement, NACK) to the network device, or the terminal device does not perform HARQ feedback.

Usually, different services have different requirements on data transmission reliability. For example, some services have a high requirement on data transmission reliability, and the terminal device needs to perform HARQ feedback. For another example, some services have a low requirement on data transmission reliability, and the terminal device does not need to perform HARQ feedback. However, if the RRC configuration message indicates the terminal device to perform HARQ feedback, it means that the terminal device needs to constantly perform HARQ feedback based on the RRC configuration message. Similarly, if the RRC configuration message indicates the terminal device not to perform HARQ feedback, it means that the terminal device needs to constantly not perform HARQ feedback based on the RRC configuration message. This leads to inflexible HARQ feedback.

### SUMMARY

This application provides a communication method and apparatus, so that HARQ feedback can be more flexible.

According to a first aspect, a communication method is provided, including: obtaining first information, where the first information is used to determine a parsing manner of downlink control information (downlink control information, DCI); receiving first DCI from a network device; and parsing the first DCI based on the first information, to determine whether to perform HARQ feedback. It can be learned that a terminal device may parse the first DCI from the network device based on the parsing manner of the DCI, to determine whether to perform HARQ feedback. This indicates that the terminal device may determine, based on DCI, whether to perform HARQ feedback, and does not need to constantly determine, based on an RRC configuration message, whether to perform HARQ feedback, so that HARQ feedback can be more flexible. In addition, a terminal device that does not support RRC reconfiguration may also determine, based on DCI, whether to perform HARQ feedback.

With reference to the first aspect, in a possible implementation, that the first information is used to determine the parsing manner of the DCI includes: the first information indicates at least one of the following: the DCI is used to determine whether to perform HARQ feedback, a first indicator field in the DCI is used to determine whether to perform HARQ feedback, and a second indicator field in the DCI is used to determine whether to perform HARQ feedback. The first indicator field in the DCI is different from the second indicator field in the DCI. This indicates that when the first information indicates at least one of the following: the DCI is used to determine whether to perform HARQ feedback, the first indicator field in the DCI is used to determine whether to perform HARQ feedback, and the second indicator field in the DCI is used to determine whether to perform HARQ feedback, the terminal device may determine, by parsing the DCI, whether to perform HARQ feedback.

In a possible implementation, the first indicator field may be, for example, an existing indicator field, and the second indicator field may be, for example, a newly added indicator field.

With reference to the first aspect, in a possible implementation, the first information is predefined or preconfigured, or the first information is indicated by the network device to the terminal device. It can be learned that the first information is predefined or preconfigured, and the first information does not need to be indicated by using signaling. This reduces signaling overheads. When the first information is indicated by the network device to the terminal device, the terminal device may learn of the first information.

With reference to the first aspect, in a possible implementation, the method further includes: obtaining second information, where the second information indicates that the first DCI is used by the terminal device to determine that HARQ feedback needs to be performed. The second information may be predefined or preconfigured, or the second information is indicated by the network device to the terminal device. In this way, UE learns that, that a HARQ feedback switch is on may be independently implemented based on the first DCI.

The HARQ feedback switch in this application represents whether the terminal device needs to perform HARQ feedback after receiving data. The HARQ feedback switch includes two states: on and off. That the HARQ feedback switch is on indicates that the terminal device performs HARQ feedback after receiving the data. That the HARQ feedback switch is off indicates that the terminal device does not need to perform HARQ feedback after receiving the data.

With reference to the first aspect, in a possible implementation, parsing the first DCI based on the first information, to determine whether to perform HARQ feedback includes: determining a size and a format of the first DCI; and determining, based on the first information and the size and the format of the first DCI, that the first DCI indicates to perform HARQ feedback. This indicates that the terminal device may determine, based on the DCI, whether to perform HARQ feedback. In other words, that the HARQ feedback switch is on may be independently implemented based on the DCI, and there is no need to constantly determine, based on the RRC configuration message, whether to perform HARQ feedback, so that HARQ feedback can be more flexible.

With reference to the first aspect, in a possible implementation, the method further includes: obtaining third information, where the third information indicates that the first DCI is used by the terminal device to determine that HARQ feedback does not need to be performed. The third information may be predefined or preconfigured, or the third information is indicated by the network device to the terminal device. In this way, UE learns that, that a HARQ feedback switch is off may be independently implemented based on the first DCI.

With reference to the first aspect, in a possible implementation, parsing the first DCI based on the first information, to determine whether to perform HARQ feedback includes: determining a size and a format of the first DCI; and determining, based on the first information and the size and the format of the first DCI, that the first DCI indicates not to perform HARQ feedback. This indicates that the terminal device may determine, based on the DCI, whether to perform HARQ feedback. In other words, that the HARQ feedback switch is off may be independently implemented based on the DCI, and there is no need to constantly determine, based on the RRC configuration message, whether to perform HARQ feedback, so that HARQ feedback can be more flexible.

With reference to the first aspect, in a possible implementation, the method further includes: obtaining fourth information, where the fourth information indicates that the first DCI is used to modify first configuration information in the terminal device. The first configuration information indicates the terminal device to perform HARQ feedback; the first configuration information indicates the terminal device not to perform HARQ feedback; the first configuration information indicates the terminal device to perform HARQ feedback for a first process and perform HARQ feedback for a second process, where the first process is different from the second process; the first configuration information indicates the terminal device to perform HARQ feedback for a first process and not to perform HARQ feedback for a second process; the first configuration information indicates the terminal device not to perform HARQ feedback for a first process and to perform HARQ feedback for a second process; or the first configuration information indicates the terminal device not to perform HARQ feedback for a first process and not to perform HARQ feedback for a second process. The fourth information may be predefined or preconfigured, or the fourth information is indicated by the network device to the terminal device. This indicates that, that the HARQ feedback switch is on or off may be implemented based on the first DCI by modifying the first configuration information.

With reference to the first aspect, in a possible implementation, the method further includes: parsing the first DCI based on the first information, to determine whether to perform HARQ feedback includes: determining a size and a format of the first DCI; parsing the first DCI based on the first information and the size and the format of the first DCI, to obtain a parsing result; and updating the first configuration information based on the parsing result, to obtain second configuration information. It can be learned that the terminal device may update the first configuration information based on the parsing result of the first DCI. In other words, the terminal device may modify the first configuration information by using the parsing result of the first DCI, to obtain the second configuration information. Therefore, the terminal device that does not support RRC reconfiguration may modify the first configuration information based on the DCI, so that the terminal device does not need to constantly determine, based on the first configuration information, whether to perform HARQ feedback. In this way, HARQ feedback can be more flexible.

With reference to the first aspect, in a possible implementation, if the first configuration information indicates the terminal device to perform HARQ feedback, and the parsing result indicates the terminal device not to perform HARQ feedback, the second configuration information indicates the terminal device not to perform HARQ feedback; or if the first configuration information indicates the terminal device to perform HARQ feedback, and the parsing result indicates to override the first configuration information, the second configuration information indicates the terminal device not to perform HARQ feedback. This indicates that HARQ feedback switches for different processes are turned from "on" to "off'. Alternatively, if the first configuration information indicates the terminal device not to perform HARQ feedback, and the parsing result indicates the terminal device to perform HARQ feedback, the second configuration information indicates the terminal device to perform HARQ feedback; or if the first configuration information indicates the terminal device not to perform HARQ feedback, and the parsing result indicates to override the first configuration information, the second configuration information indicates the terminal device to perform HARQ feedback. This indicates that HARQ feedback switches for different processes are turned from "off" to "on".

With reference to the first aspect, in a possible implementation, that the terminal device modifies the first configuration information based on DCI is predefined or preconfigured, or that the terminal device modifies the first configuration information based on DCI is indicated by the network device to the terminal device. It can be learned that, because that the terminal device modifies the first configuration information based on the DCI is predefined or preconfigured, that the terminal device modifies the configuration information based on the DCI does not need to be indicated by using signaling. This reduces signaling overheads. That the terminal device modifies the first configuration information based on the DCI is indicated by the network device to the terminal device, so that the terminal device learns that the first configuration information may be modified based on the DCI.

With reference to the first aspect, in a possible implementation, if the first configuration information indicates the terminal device to perform HARQ feedback for the first process and perform HARQ feedback for the second process, and the parsing result indicates the terminal device not to perform HARQ feedback for the first process, the second configuration information indicates the terminal device not to perform HARQ feedback for the first process and to perform HARQ feedback for the second process; if the first configuration information indicates the terminal device to perform HARQ feedback for the first process and not to perform HARQ feedback for the second process, and the parsing result indicates the terminal device not to perform HARQ feedback for the first process, the second configuration information indicates the terminal device not to perform HARQ feedback for the first process and not to perform HARQ feedback for the second process; if the first configuration information indicates the terminal device not to perform HARQ feedback for the first process and to perform HARQ feedback for the second process, and the parsing result indicates the terminal device to perform HARQ feedback for the first process, the second configuration information indicates the terminal device to perform HARQ feedback for the first process and perform HARQ feedback for the second process; if the first configuration information indicates the terminal device not to perform HARQ feedback for the first process and not to perform HARQ feedback for the second process, and the parsing result indicates the terminal device to perform HARQ feedback for the first process, the second configuration information indicates the terminal device to perform HARQ feedback for the first process and not to perform HARQ feedback for the second process; if the first configuration information indicates the terminal device to perform HARQ feedback for the first process and perform HARQ feedback for the second process, and the parsing result indicates to override the first configuration information for the first process, the second configuration information indicates the terminal device not to perform HARQ feedback for the first process and to perform HARQ feedback for the second process; if the first configuration information indicates the terminal device to perform HARQ feedback for the first process and not to perform HARQ feedback for the second process, and the parsing result indicates to override the first configuration information for the first process, the second configuration information indicates the terminal device not to perform HARQ feedback for the first process and not to perform HARQ feedback for the second process; if the first configuration information indicates the terminal device not to perform HARQ feedback for the first process and to perform HARQ feedback for the second process, and the parsing result indicates to override the first configuration information for the first process, the second configuration information indicates the terminal device to perform HARQ feedback for the first process and perform HARQ feedback for the second process; or if the first configuration information indicates the terminal device not to perform HARQ feedback for the first process and not to perform HARQ feedback for the second process, and the parsing result indicates to override the first configuration information for the first process, the second configuration information indicates the terminal device to perform HARQ feedback for the first process and not to perform HARQ feedback for the second process.

It can be learned that the terminal device may modify, based on the DCI, configuration information about whether to perform HARQ feedback for a specific process, but the terminal device does not modify, based on the DCI, configuration information about whether to perform HARQ feedback for another process. This indicates that the terminal device can more flexibly perform HARQ feedback for different processes.

With reference to the first aspect, in a possible implementation, that the terminal device is allowed to modify, based on DCI, configuration information about whether to perform HARQ feedback for the first process, and the terminal device is not allowed to modify, based on the DCI, configuration information about whether to perform HARQ feedback for the second process is predefined or preconfigured, or that the terminal device is allowed to modify, based on DCI, configuration information about whether to perform HARQ feedback for the first process, and the terminal device is not allowed to modify, based on the DCI, configuration information about whether to perform HARQ feedback for the second process is indicated by the network device to the terminal device. This indicates that the terminal device may modify, based on the DCI, configuration information about whether to perform HARQ feedback for a specific process, but cannot modify configuration information about whether to perform HARQ feedback for another process. This can meet different requirements of the terminal device on data transmission reliability for different processes.

With reference to the first aspect, in a possible implementation, the method further includes: obtaining fifth information, where the fifth information indicates time for which the terminal device parses DCI based on the first information. This indicates that there is a time limit for the terminal device to parse the DCI based on the first information. In other words, in other time, the terminal device may parse the DCI in another parsing manner.

With reference to the first aspect, in a possible implementation, the method further includes: sending capability information to the network device, where the capability information includes at least one of the following: the terminal device does not support a capability of RRC reconfiguration, and the terminal device supports a capability of determining, based on DCI, whether to perform HARQ feedback. The terminal device reports the capability information to the network device, so that the network device can learn of the capability supported by the terminal device and the capability not supported by the terminal device.

According to a second aspect, a communication apparatus is provided, including a unit or a module configured to implement the method according to any implementation of the first aspect.

According to a third aspect, a communication apparatus is provided. The communication apparatus includes at least one processor and a memory. The memory is configured to store a computer program or instructions. The at least one processor is configured to execute the computer program or the instructions in the memory, so that the method according to any implementation of the first aspect is performed.

According to a fourth aspect, this application provides a computer-readable storage medium. The computer-readable storage medium stores computer instructions. When the computer instructions are executed, the computer is enabled to perform the method according to any implementation of the first aspect.

According to a fifth aspect, this application provides a computer program product. The computer program product includes computer program code. When the computer program code is run on a computer, the computer is enabled to perform the method according to any implementation of the first aspect.

According to a sixth aspect, a communication system is provided. The communication system includes a terminal device that performs the method according to any implementation of the first aspect, and a network device that communicates with the terminal device.

### BRIEF DESCRIPTION OF DRAWINGS

The following briefly describes accompanying drawings used for describing embodiments.
FIG. 1 shows a basic architecture of a communication system to which an embodiment of this application is applicable;
FIG. 2 is a diagram of a satellite-to-ground convergence architecture to which an embodiment of this application is applicable;
FIG. 3 is a diagram of a hardware structure applicable to a communication apparatus according to an embodiment of this application;
FIG. 4 is a schematic flowchart of a communication method according to an embodiment of this application;
FIG. 5 is a diagram of a structure of a communication apparatus according to an embodiment of this application; and
FIG. 6 is a diagram of a simplified structure of UE according to an embodiment of this application.

### DESCRIPTION OF EMBODIMENTS

The following describes the technical solutions in embodiments of this application with reference to the accompanying drawings in embodiments of this application. The terms "system" and "network" may be used interchangeably in embodiments of this application. Unless otherwise specified, "/" indicates an "or" relationship between associated objects. For example, A/B may indicate A or B. In this application, "and/or" describes only an association relationship between associated objects and indicates that three relationships may exist. For example, A and/or B may indicate the following three cases: Only A exists, both A and B exist, and only B exists, where A or B may be singular or plural. In addition, in descriptions of this application, "a plurality of" means two or more, unless otherwise specified. "At least one of the following items (pieces)" or a similar expression thereof means any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural. In addition, to clearly describe the technical solutions in embodiments of this application, the terms such as "first" and "second" are used in embodiments of this application to distinguish between same items or similar items that have basically same network elements or purposes. A person skilled in the art may understand that the terms such as "first" and "second" do not limit a quantity or an execution sequence, and the terms such as "first" and "second" do not indicate a definite difference.

Reference to "an embodiment", "some embodiments", or the like described in embodiments of this application means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The objectives, technical solutions, and beneficial effect of this application are further described in detail in the following specific implementations. It should be understood that the following descriptions are merely specific implementations of this application, but are not intended to limit the protection scope of this application. Any modification, equivalent replacement, improvement, or the like made based on the technical solutions of this application shall fall within the protection scope of this application.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be understood that the technical solutions in embodiments of this application are applicable to a long term evolution (long term evolution, LTE) architecture, a 5^{th} generation mobile communication technology (5^{th} generation mobile network, 5G), a wireless local area network (wireless local area network, WLAN) system, a V2X communication system, and the like. The technical solutions in embodiments of this application are further applicable to another future communication system, for example, a 6G communication system. In the future communication system, a same function may be maintained, but a name may be changed.

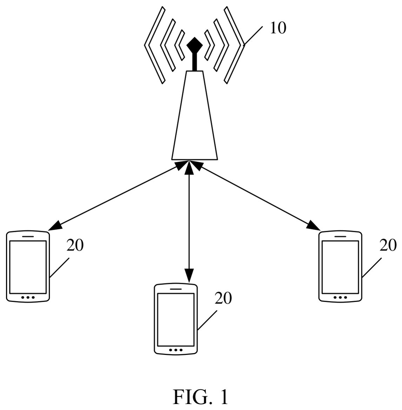

The following describes a basic architecture of a communication system according to embodiments of this application. FIG. 1 shows a basic architecture of a communication system to which an embodiment of this application is applicable. As shown in FIG. 1, the communication system may include a network device 10 and one or more terminal devices (for example, a terminal device 20 in FIG. 1) communicating with the network device 10. FIG. 1 is merely a diagram, and does not constitute a limitation on an applicable scenario of the technical solutions provided in this application.

In this application, the network device may be a terrestrial network (terrestrial network, TN) device or a non-terrestrial network (non-terrestrial network, NTN) device.

The terrestrial network device is an entity that is on a network side and that is configured to send a signal, receive a signal, or send a signal and receive a signal. The terrestrial network device may be an apparatus that is deployed in a radio access network (radio access network, RAN) and that provides a wireless communication function for the terminal device, for example, may be a transmission reception point (transmission reception point, TRP), a base station, or control nodes in various forms, for example, a network controller, a radio controller, or a radio controller in a cloud radio access network (cloud radio access network, CRAN) scenario. Specifically, the terrestrial network device may be a macro base station, a micro base station (also referred to as a small station), a relay station, an access point (access point, AP), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmitting and receiving point (transmitting and receiving point, TRP), a transmitting point (transmitting point, TP), a mobile switching center, a satellite, an uncrewed aerial vehicle, or the like in various forms, or may be an antenna panel of a base station. The control node may be connected to a plurality of base stations, and configure resources for a plurality of terminals covered by the plurality of base stations. In systems using different radio access technologies, names of devices having a base station function may be different. For example, the device may be a gNB in 5G, a network side device in a network after 5G, a terrestrial network device in a future evolved public land mobile (communication) network (public land mobile network, PLMN), or a device that has a base station function in device-to-device (Device-to-Device, D2D) communication, machine-to-machine (Machine-to-Machine, M2M) communication, or internet of vehicles communication. A specific name of the terrestrial network device is not limited in this application. In addition, the terrestrial network device may further include a distributed unit (distributed unit, DU) and a central unit (central unit, CU). Alternatively, the terrestrial network device may be an open access network (open RAN, O-RAN, or ORAN), a cloud radio access network (cloud radio access network, CRAN), or a Wi-Fi system. Alternatively, the terrestrial network device may be a communication system integrating the foregoing two or more systems.

The non-terrestrial network device may provide a wireless access service for the terminal device, schedule a radio resource for the accessed terminal device, and provide a reliable wireless transmission protocol, a reliable data encryption protocol, and the like. The non-terrestrial network device may be a base station used for wireless communication, such as an artificial earth satellite and a high-altitude aircraft, for example, a medium earth orbit (medium earth orbit, MEO) satellite or a low earth orbit (low earth orbit, LEO) satellite in a non-geostationary earth orbit (non-geostationary earth orbit, NGEO), or a high-altitude communication platform (high-altitude platform station, HAPS). The terrestrial network device may also have a relay forwarding function, and transparently transmit (transparent) a wireless signal to the terminal device.

The terminal device is a user-side entity that is configured to receive a signal, send a signal, or receive a signal and send a signal. The terminal device is configured to provide one or more of a voice service and a data connectivity service for a user. The terminal device may be a device that includes a wireless transceiver function and that can cooperate with the network device to provide a communication service for the user. Specifically, the terminal device may be user equipment (user equipment, UE), an access terminal, a subscriber unit, a subscriber station, a mobile station, a remote station, a remote terminal, a mobile device, a terminal, a wireless communication device, a user agent, a user apparatus, or a roadside unit (roadside unit, RSU). The terminal device may alternatively be an uncrewed aerial vehicle, an internet of things (internet of things, IoT) device, a station (station, ST) in a WLAN, a cellular phone (cellular phone), a smartphone (smartphone), a cordless phone, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine-type communication (machine-type communication, MTC) terminal, a handheld device with a wireless communication function, a computing device or another processing device connected to a wireless modem, a vehicle-mounted device, a wearable device (also referred to as a wearable intelligent device), a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. The terminal device may alternatively be a device-to-device (device-to-device, D2D) device, for example, an electricity meter or a water meter. Alternatively, the terminal device may be a terminal in a 5G system, or a terminal in a next-generation communication system. This is not limited in embodiments of this application.

The following uses an example in which the non-terrestrial network device is a satellite, to describe three satellite-to-ground convergence system architectures.

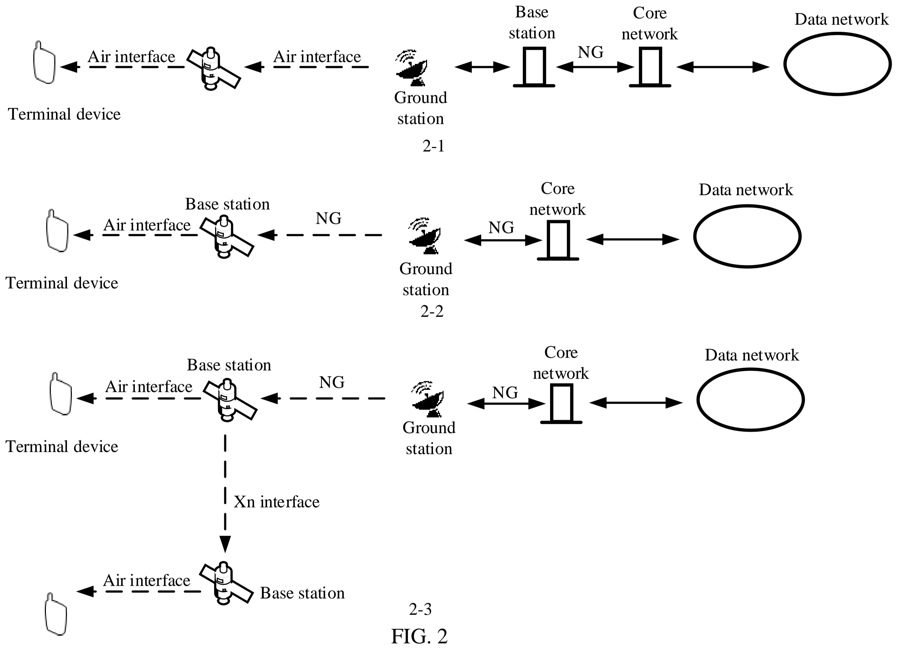

FIG. 2 is a diagram of a satellite-to-ground convergence architecture to which an embodiment of this application is applicable. As shown in FIG. 2, a terminal device may access a network through an air interface (the air interface may be various types of air interfaces, for example, a 5G air interface). A base station may be deployed on a ground station that is on the ground and that communicates with a satellite, for example, as shown in 2-1 in FIG. 2. Alternatively, a base station may be deployed on a satellite, for example, as shown in 2-2 in FIG. 2. The satellite is connected to the ground station through a radio link. The ground station is connected to a core network in a wired or wireless manner. The radio link may exist between satellites. If the satellite has only a transparent transmission and forwarding function (that is, the corresponding base station is deployed on the ground), only transparent transmission and forwarding are implemented between the satellites. If the base station or some base station functions are deployed on the satellite, signaling exchange and user data transmission between base stations may be completed between the satellites, as shown in 2-3 in FIG. 2. Network elements and interfaces of the network elements in FIG. 2 are described as follows.

Terminal device: The terminal device includes a mobile device that supports new radio, for example, a mobile device such as a mobile phone or a pad. The terminal device may access a satellite network through an air interface and initiate a service such as a call or network access.

Base station: The base station mainly provides a wireless access service, schedules a radio resource for an access terminal, and provides a reliable wireless transmission protocol, a reliable data encryption protocol, and the like.

Core network: The core network provides services such as user access control, mobility management, session management, user authentication, and billing. The core network includes a plurality of functional units, and the functional units may be classified into control-plane functional entities and data-plane functional entities. An access and mobility management function (access and mobility management function, AMF) network element is responsible for user access management, authentication, mobility management, and the like. A user plane function (user plane function, UPF) network element is responsible for managing functions such as user plane data transmission and traffic statistics.

Data network (data network, DN): The data network is a network located outside a mobile communication system and can provide a service for a user. For example, the DN may be a packet data network (packet data network, PDN), for example, the Internet (Internet), an Internet protocol multi-media service (Internet protocol multi-media service, IMS) network, a data network dedicated to some applications, an Ethernet, or an Internet protocol (Internet protocol, IP) local network. This is not limited in this embodiment of this application.

Ground station: The ground station is responsible for forwarding signaling and service data between a satellite base station and a core network.

Air interface: The air interface is a radio link between a terminal and a base station.

Xn interface: The Xn interface is an interface between base stations and is mainly configured for signaling interactions such as handover. In a 4G communication system, the Xn interface is referred to as an X2 interface.

NG interface: The NG interface is an interface between a base station and a core network, and is mainly configured to exchange non-access stratum (non-access stratum, NAS) signaling and the like of a core network, and exchange service data of a user. In a 4G communication system, the NG interface is referred to as an S1 interface.

Optionally, each device in FIG. 1 or FIG. 2 may be implemented by one device, may be jointly implemented by a plurality of devices, or may be one functional module in one device. This is not specifically limited in this embodiment of this application. It may be understood that the foregoing function may be a network element in a hardware device, a software function running on dedicated hardware, or a virtualization function instantiated on a platform (for example, a cloud platform).

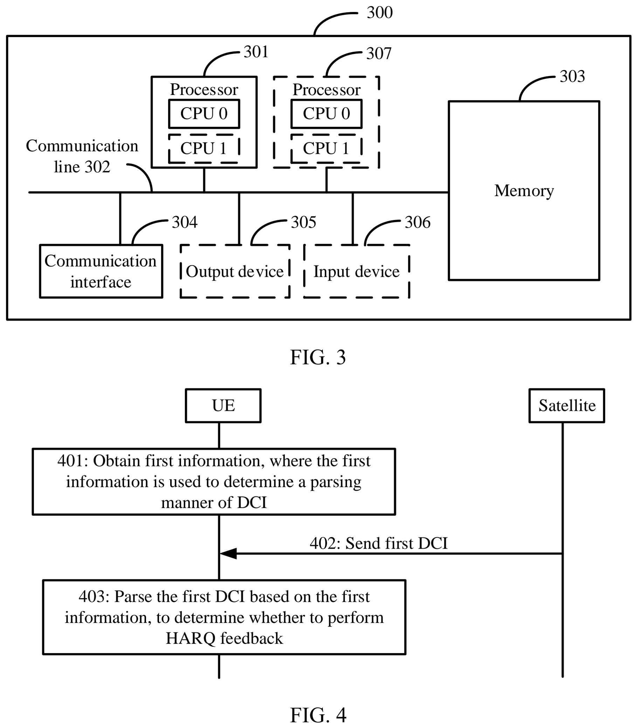

For example, each device in FIG. 1 or FIG. 2 may be implemented by using a communication apparatus 300 in FIG. 3. FIG. 3 is a diagram of a hardware structure applicable to a communication apparatus according to an embodiment of this application. The communication apparatus 300 includes at least one processor 301, a communication line 302, a memory 303, and at least one communication interface 304.

The processor 301 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 302 may include a path for transmitting information between the foregoing components.

The communication interface 304 is an apparatus (for example, an antenna) of any transceiver type, and is configured to communicate with another device or a communication network. The communication network may be, for example, an Ethernet, a RAN, or a wireless local area network (wireless local area network, WLAN).

The memory 303 may be a read-only memory (read-only memory, ROM), another type of static storage device that can store static information and instructions, a random access memory (random access memory, RAM), or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can carry or store expected program code in a form of instructions or data structure and that can be accessed by a computer, but is not limited thereto. The memory may exist independently, and is connected to the processor through the communication line 302. The memory may alternatively be integrated with the processor. The memory provided in this embodiment of this application may be usually non-volatile.

The memory 303 is configured to store computer-executable instructions for performing the solutions in this application, and the processor 301 controls execution. The processor 301 is configured to execute the computer-executable instructions stored in the memory 303, to implement methods provided in the following embodiments of this application.

Optionally, the computer-executable instructions in this embodiment of this application may also be referred to as application program code. This is not specifically limited in this embodiment of this application.

In a possible implementation, the processor 301 may include one or more CPUs, for example, a CPU 0 and a CPU 1 in FIG. 3.

In a possible implementation, the communication apparatus 300 may include a plurality of processors, for example, the processor 301 and a processor 307 in FIG. 3. Each of the processors may be a single-core (single-CPU) processor, or may be a multi-core (multi-CPU) processor. The processor herein may be one or more devices, circuits, and/or processing cores configured to process data (for example, computer program instructions).

In a possible implementation, the communication apparatus 300 may further include an output device 305 and an input device 306. The output device 305 communicates with the processor 301, and may display information in a plurality of manners. For example, the output device 305 may be a liquid crystal display (liquid crystal display, LCD), a light-emitting diode (light-emitting diode, LED) display device, a cathode ray tube (cathode ray tube, CRT) display device, a projector (projector), or the like. The input device 306 communicates with the processor 301, and may receive an input of a user in a plurality of manners. For example, the input device 306 may be a mouse, a keyboard, a touchscreen device, a sensor device, or the like.

The foregoing communication apparatus 300 may be a general-purpose device or a dedicated device. In a specific implementation, the communication apparatus 300 may be a desktop computer, a portable computer, a network server, a palmtop computer (personal digital assistant, PDA), a mobile phone, a tablet computer, a wireless terminal device, an embedded device, or a device having a similar structure in FIG. 3. A type of the communication apparatus 300 is not limited in this embodiment of this application.

The following describes a communication method provided in embodiments of this application in detail with reference to FIG. 1 to FIG. 3. Specifically, the following uses an example in which a terminal device and a network device are respectively the UE and the satellite in FIG. 1 for description. Optionally, the UE may be, for example, an IoT terminal that supports satellite communication, a low-capability 5G terminal, or an LTE terminal. The satellite may be, for example, a 5G satellite base station or an LTE satellite base station.

It should be noted that names of messages between network elements, names of parameters in the messages, or the like in the following embodiments of this application are merely examples, and there may be other names in a specific implementation. This is not specifically limited in embodiments of this application.

A HARQ feedback switch in this application represents whether the UE needs to perform HARQ feedback after receiving data. The HARQ feedback switch includes two states: on and off. That the HARQ feedback switch is on indicates that the UE performs HARQ feedback after receiving the data. That the HARQ feedback switch is off indicates that the UE does not need to perform HARQ feedback after receiving the data.

A first indicator field and a second indicator field in this application are different. The first indicator field may be, for example, an existing indicator field, such as a scheduling delay indication, a resource allocation indication, a modulation and coding scheme (modulation and coding scheme, MCS), a HARQ-ACK resource, a subcarrier indication, a quantity of data repetitions, or a quantity of DCI subframe repetitions. For details, refer to the 3rd generation partnership project (3rd generation partnership project, 3GPP) technical specification (technical specification, TS) 38.213 or TS 38.214. The second indicator field may be, for example, a newly added indicator field.

Overriding in this application may be understood as that the HARQ feedback switch is turned from "on" to "off", or the HARQ feedback switch is turned from "off" to "on", or "to perform HARQ feedback" is turned to "not to perform HARQ feedback", or "not to perform HARQ feedback" is turned to "to perform HARQ feedback".

FIG. 4 shows a communication method provided in an embodiment of this application, and the communication method includes but is not limited to the following steps.

401: UE obtains first information, where the first information is used to determine a parsing manner of DCI.

In a possible implementation, the first information is predefined or preconfigured, or the first information is indicated by a satellite to the UE.

In a possible implementation, that the first information is used to determine the parsing manner of the DCI includes: the first information indicates at least one of the following: the DCI is used to determine whether to perform HARQ feedback, a first indicator field in the DCI is used to determine whether to perform HARQ feedback, and a second indicator field in the DCI is used to determine whether to perform HARQ feedback. It may also be understood as that the first information indicates that a DCI override (override) function is enabled. That is, a function of overriding first configuration information based on the DCI is enabled. For example, the first configuration information indicates the UE to perform HARQ feedback. After the function of overriding the first configuration information based on the DCI is enabled, the UE may update the first configuration information to not to perform HARQ feedback.

The first configuration information indicates the UE to perform HARQ feedback; the first configuration information indicates the UE not to perform HARQ feedback; the first configuration information indicates the UE to perform HARQ feedback for a first process and perform HARQ feedback for a second process; the first configuration information indicates the UE to perform HARQ feedback for a first process and not to perform HARQ feedback for a second process; the first configuration information indicates the UE not to perform HARQ feedback for a first process and to perform HARQ feedback for a second process; or the first configuration information indicates the UE not to perform HARQ feedback for a first process and not to perform HARQ feedback for a second process. The first process is different from the second process. Optionally, there may be one or more first processes, and there may be one or more second processes.

It should be noted that, that specific information (such as the first configuration information, a parsing result, or second configuration information) or specific signaling (such as the DCI) in this application indicates the UE not to perform HARQ feedback may be understood as that the UE does not perform HARQ feedback for at least one process or all processes, a HARQ feedback switch of the UE for at least one process or HARQ feedback switches of the UE for all processes are off, a HARQ feedback switch of the UE for at least one process or HARQ feedback switches of the UE for all processes are turned off, or the like. Similarly, that specific information (such as the first configuration information, the parsing result, or the second configuration information) or specific signaling (such as the DCI) in this application indicates the UE to perform HARQ feedback may be understood as that the UE performs HARQ feedback for the at least one process or all the processes, the HARQ feedback switch of the UE for the at least one process or the HARQ feedback switches of the UE for all the processes are on, the HARQ feedback switch of the UE for the at least one process or the HARQ feedback switches of the UE for all the processes are turned on, or the like.

402: The satellite sends first DCI to the UE, and correspondingly, the UE receives the first DCI from the satellite.

For example, the first DCI may be implemented in the following plurality of manners:
Manner 1.1: The first DCI indicates the UE not to perform HARQ feedback.
Manner 1.2: The first DCI indicates the UE to perform HARQ feedback.
Manner 1.3: The first DCI indicates to override the first configuration information. For example, the first configuration information is overridden for at least one process or all processes.
Manner 1.4: The first DCI indicates to override the first configuration information for the first process.

Optionally, that the first DCI indicates the UE to perform HARQ feedback may be understood as that at least one bit (for example, a most significant bit or a least significant bit) of a first indicator field, at least one index of the first indicator field, at least one bit (for example, a most significant bit or a least significant bit) of a second indicator field, or at least one index of the second indicator field in the first DCI indicates the UE to perform HARQ feedback, and vice versa.

When the at least one index of the first indicator field indicates the UE to perform HARQ feedback, the first indicator field may be, for example, a HARQ-ACK resource. For example, when the HARQ-ACK resource is 1111, the first DCI indicates the UE not to perform HARQ feedback. When the HARQ-ACK resource is another value, the first DCI indicates the UE to perform HARQ feedback. A reason why an MCS is not used herein is as follows: The index needs to indicate by using all bits in the field jointly. If the MCS indicates the HARQ feedback switch through two states, it means that a meaning of the MCS cannot be indicated. For example, that the MCS is 1111 indicates that the HARQ feedback switch is on, and that the MCS is 1101 indicates that the HARQ feedback switch is off. In this case, the MCS cannot indicate the meaning of the MCS. In addition, the existing MCS has 11 indications, 1110 and 1111 have special meanings, and four bits may have a maximum of 16 indications. If only one of the four bits is occupied to indicate the UE to perform HARQ feedback, remaining three bits may have a maximum of eight indications. Apart from the two special indications, the existing MCS is reduced from 11 to 6 indications, which affects scheduling flexibility. In addition, an MCS index indicating that the HARQ feedback switch is on is the default, an MCS index indicating that the HARQ feedback switch is off is the default, and the MCS indicates a status of the HARQ feedback switch. This is more inflexible.

When the first indicator field is a HARQ-ACK resource, because a resource occupied by the HARQ feedback does not need to be indicated when the HARQ feedback switch is off, that is, the indicator field, namely, the HARQ-ACK resource, is not required, it means that when the HARQ feedback switch is indicated to be off (that is, not to perform HARQ feedback), one index may be used to occupy all the bits. For example, if the field is 1111, it indicates that the HARQ feedback switch is turned from "on" to "off". Because there is no need to perform HARQ feedback, the indicator field, namely, the HARQ-ACK resource, is not required. If the field is another indication, it indicates that the HARQ feedback switch is turned from "off" to "on". An ACK/NACK is interpreted in a same way as it should be, but is not 1111. In other words, cases of the resource occupied by the HARQ feedback and indicated by the HARQ-ACK resource are reduced from eight to seven. This has less impact on an existing standard.

403: The UE parses the first DCI based on the first information, to determine whether to perform HARQ feedback.

Optionally, step 403 may be implemented in any one of the following manners.

Manner 2.1: The UE determines a size and a format of the first DCI; and the UE determines, based on the first information and the size and the format of the first DCI, that the first DCI indicates to perform HARQ feedback. For example, when the first DCI indicates the UE to perform HARQ feedback, the UE determines, based on the first information, that the first DCI indicates to perform HARQ feedback. In this application, the size of the first DCI may be understood as a quantity of bits of the first DCI, and the quantity of bits of the first DCI is a quantity of bits that the UE needs to perform blind detection on. The format of the first DCI may be, for example, an existing format or a newly added format. This is not limited herein. In a possible implementation, the method further includes: The UE obtains second information, where the second information indicates that the first DCI is used by the UE to determine that HARQ feedback needs to be performed. The second information may be predefined or preconfigured, or the second information is indicated by the satellite to the UE. For example, the second information is carried in an RRC configuration message. Optionally, that the UE obtains the second information may be performed before "the UE determines, based on the first information, that the first DCI indicates to perform HARQ feedback". In this way, the UE learns that, that the HARQ feedback switch is on may be independently implemented based on the first DCI, and there is no need to constantly determine, based on the RRC configuration message, whether to perform HARQ feedback, so that HARQ feedback can be more flexible.

Manner 2.2: The UE determines a size and a format of the first DCI; and the UE determines, based on the first information and the size and the format of the first DCI, that the first DCI indicates not to perform HARQ feedback. For example, when the first DCI indicates the UE not to perform HARQ feedback, the UE determines, based on the first information, that the first DCI indicates not to perform HARQ feedback. In a possible implementation, the method further includes: The UE obtains third information, where the third information indicates that the first DCI is used by the UE to determine that HARQ feedback does not need to be performed. The third information may be predefined or preconfigured, or the third information is indicated by the satellite to the UE. For example, the third information is carried in an RRC configuration message. Optionally, that the UE obtains the third information may be performed before "the UE determines, based on the first information, that the first DCI indicates not to perform HARQ feedback". In this way, the UE learns that, that the HARQ feedback switch is off may be independently implemented based on the first DCI, and there is no need to constantly determine, based on the RRC configuration message, whether to perform HARQ feedback, so that HARQ feedback can be more flexible.

Manner 2.3: The UE determines a size and a format of the first DCI; the UE parses the first DCI based on the first information and the size and the format of the first DCI, to obtain the parsing result; and the UE updates the first configuration information based on the parsing result, to obtain the second configuration information. The first configuration information may be, for example, carried in an RRC configuration message. In a possible implementation, the method further includes: The UE obtains fourth information, where the fourth information indicates that the first DCI is used to modify the first configuration information. For example, the fourth information indicates that the first DCI is used to override the HARQ feedback switch configured by using the first configuration information, the fourth information indicates that the first DCI is used to turn the HARQ feedback switch configured by using the first configuration information from "off" to "on", the fourth information indicates that the first DCI is used to turn the HARQ feedback switch configured by using the first configuration information from "on" to "off", or the fourth information indicates that the first DCI is used to override the first configuration information. The fourth information may be predefined or preconfigured, or the fourth information is indicated by the satellite to the UE. For example, the fourth information is carried in the RRC configuration message. Optionally, that the UE obtains the fourth information may be performed before "the UE parses the first DCI based on the first information, to obtain the parsing result". In this way, UE that does not support RRC reconfiguration may modify the first configuration information based on the DCI, so that the UE does not need to constantly determine, based on the first configuration information, whether to perform HARQ feedback. In this way, HARQ feedback can be more flexible.

In this application, for example, the first configuration information, the parsing result, and the second configuration information may be implemented in the following plurality of manners:
Manner 3.1: If the first configuration information indicates the UE to perform HARQ feedback, and the parsing result indicates the UE not to perform HARQ feedback, the second configuration information indicates the UE not to perform HARQ feedback. Alternatively, if the first configuration information indicates the UE to perform HARQ feedback, and the parsing result indicates to override the first configuration information, the second configuration information indicates the UE not to perform HARQ feedback. This indicates that HARQ feedback switches for different processes are turned from "on" to "off".
Manner 3.2: If the first configuration information indicates the UE not to perform HARQ feedback, and the parsing result indicates the UE to perform HARQ feedback, the second configuration information indicates the UE to perform HARQ feedback. Alternatively, if the first configuration information indicates the UE not to perform HARQ feedback, and the parsing result indicates to override the first configuration information, the second configuration information indicates the UE to perform HARQ feedback. This indicates that HARQ feedback switches for different processes are turned from "off" to "on".
Manner 3.3: If the first configuration information indicates the UE to perform HARQ feedback for the first process and perform HARQ feedback for the second process, and the parsing result indicates the UE not to perform HARQ feedback for the first process, the second configuration information indicates the UE not to perform HARQ feedback for the first process and to perform HARQ feedback for the second process. Alternatively, if the first configuration information indicates the UE to perform HARQ feedback for the first process and perform HARQ feedback for the second process, and the parsing result indicates to override the first configuration information for the first process, the second configuration information indicates the UE not to perform HARQ feedback for the first process and to perform HARQ feedback for the second process. This indicates that the UE can perform HARQ feedback for different processes more flexibly. That specific information (such as the first configuration information, the parsing result, or the second configuration information) in this application indicates the UE not to perform HARQ feedback for the first process may be understood as that a HARQ feedback switch of the UE for the first process is off, a HARQ feedback switch of the UE for the first process is turned off, or the like. That specific information (such as the first configuration information, the parsing result, or the second configuration information) in this application indicates the UE to perform HARQ feedback for the first process may be understood as that the HARQ feedback switch of the UE for the first process is on, a HARQ feedback switch of the UE for the first process is turned on, or the like.
Manner 3.4: If the first configuration information indicates the UE to perform HARQ feedback for the first process and not to perform HARQ feedback for the second process, and the parsing result indicates the UE not to perform HARQ feedback for the first process, the second configuration information indicates the UE not to perform HARQ feedback for the first process and not to perform HARQ feedback for the second process. Alternatively, if the first configuration information indicates the UE to perform HARQ feedback for the first process and not to perform HARQ feedback for the second process, and the parsing result indicates to override the first configuration information for the first process, the second configuration information indicates the UE not to perform HARQ feedback for the first process and not to perform HARQ feedback for the second process. This indicates that the UE can perform HARQ feedback for different processes more flexibly.
Manner 3.5: If the first configuration information indicates the UE not to perform HARQ feedback for the first process and to perform HARQ feedback for the second process, and the parsing result indicates the UE to perform HARQ feedback for the first process, the second configuration information indicates the UE to perform HARQ feedback for the first process and perform HARQ feedback for the second process. Alternatively, if the first configuration information indicates the UE not to perform HARQ feedback for the first process and to perform HARQ feedback for the second process, and the parsing result indicates to override the first configuration information for the first process, the second configuration information indicates the UE to perform HARQ feedback for the first process and perform HARQ feedback for the second process. This indicates that the UE can perform HARQ feedback for different processes more flexibly.
Manner 3.6: If the first configuration information indicates the UE not to perform HARQ feedback for the first process and not to perform HARQ feedback for the second process, and the parsing result indicates the UE to perform HARQ feedback for the first process, the second configuration information indicates the UE to perform HARQ feedback for the first process and not to perform HARQ feedback for the second process. Alternatively, if the first configuration information indicates the UE not to perform HARQ feedback for the first process and not to perform HARQ feedback for the second process, and the parsing result indicates to override the first configuration information for the first process, the second configuration information indicates the UE to perform HARQ feedback for the first process and not to perform HARQ feedback for the second process. This indicates that the UE can perform HARQ feedback for different processes more flexibly.

It should be noted that the foregoing provides only some combination manners, and there are other combination manners. This is not limited in this application.

In the foregoing embodiment, the UE may parse the first DCI from the satellite based on the parsing manner of the DCI, to determine whether to perform HARQ feedback. This indicates that the UE may determine, based on DCI, whether to perform HARQ feedback, and does not need to constantly determine, based on the RRC configuration message, whether to perform HARQ feedback, so that HARQ feedback can be more flexible. In addition, for the UE that does not support RRC reconfiguration, whether to perform HARQ feedback may also be determined based on the DCI.

For the manner 3.1 or the manner 3.2, in a possible implementation, "that the UE modifies the first configuration information based on DCI is predefined or preconfigured" may also be understood as follows: That the UE is allowed to use the DCI override function is predefined or preconfigured, or that the first configuration information is allowed to be overridden based on the DCI is predefined or preconfigured. In this way, that the UE modifies the configuration information based on the DCI does not need to be indicated by using signaling. This reduces signaling overheads.

For example, when only one process is configured for the UE, the UE is allowed, by default, to use the DCI override function for the process.

In another possible implementation, "that the UE modifies the first configuration information based on DCI is indicated by the satellite to the UE" may also be understood as follows: That the UE is allowed to use the DCI override function is indicated by the satellite to the UE, or that the first configuration information is allowed to be overridden based on the DCI is indicated by the satellite to the UE. In this way, the UE learns that the configuration information may be modified based on the DCI.

It should be noted that when the UE is not allowed to modify the first configuration information based on the DCI, or the UE is not allowed to use the DCI override function, or the first configuration information is not allowed to be overridden based on the DCI, the UE may parse the DCI in an existing manner. In addition, the UE may determine, based on the first configuration information, whether to perform HARQ feedback.

For any one of the foregoing manners 3.3 to 3.6, in a possible implementation, that the UE is allowed to modify, based on DCI, configuration information about whether to perform HARQ feedback for the first process, and the UE is not allowed to modify, based on the DCI, configuration information about whether to perform HARQ feedback for the second process is predefined or preconfigured. This may also be understood as follows: That the UE is allowed to use the DCI override function for the first process and the UE is not allowed to use the DCI override function for the second process is predefined or preconfigured, that the UE is allowed to use the DCI override function for the first process and the UE performs HARQ feedback for the second process only based on configuration information in the RRC configuration message is predefined or preconfigured, that the UE is allowed to override the first configuration information for the first process based on the DCI and the UE is not allowed to override the first configuration information for the second process based on the DCI is predefined or preconfigured, or that the UE is allowed to override the first configuration information for the first process based on the DCI, and the UE performs HARQ feedback for the second process only based on configuration information in the RRC configuration message is predefined or preconfigured. This reduces signaling overheads, and can also meet different requirements of the UE on data transmission reliability for different processes.

In another possible implementation, that the UE is allowed to modify, based on DCI, configuration information about whether to perform HARQ feedback for the first process, and the UE is not allowed to modify, based on the DCI, configuration information about whether to perform HARQ feedback for the second process is indicated by the satellite to the UE. This may also be understood as follows: That the UE is allowed to use the DCI override function for the first process and the UE is not allowed to use the DCI override function for the second process is indicated by the satellite to the UE, that the UE is allowed to use the DCI override function for the first process and the UE performs HARQ feedback for the second process only based on configuration information in the RRC configuration message is indicated by the satellite to the UE, that the UE is allowed to override the first configuration information for the first process based on the DCI and the UE is not allowed to override the first configuration information for the second process based on the DCI is indicated by the satellite to the UE, or that the UE is allowed to override the first configuration information for the first process based on the DCI, and the UE performs HARQ feedback for the second process only based on configuration information in the RRC configuration message is indicated by the satellite to the UE. This meets different requirements of the UE on data transmission reliability for different processes.

In a possible implementation, the method further includes: The UE obtains fifth information. For example, the UE receives the fifth information from the satellite, where the fifth information indicates time for which the UE parses DCI based on the first information. For example, the fifth information indicates effective duration for which the UE parses the DCI based on the first information, or the fifth information indicates timer duration, where the timer duration is the time for which the UE parses the DCI based on the first information. Optionally, when a timer expires or stops, the UE does not parse the DCI based on the first information. For example, the UE parses the DCI in the existing manner. Alternatively, it may be considered that the DCI override function is ineffective, and the UE may determine, based on the configuration information in the RRC configuration message, whether to perform HARQ feedback.

Optionally, the time for which the UE parses the DCI based on the first information may be, for example, determined by the satellite according to a service requirement.

For example, the fifth information may be carried in the RRC configuration message. Optionally, the first configuration information, the fifth information, and the like may be carried in a same RRC configuration message or different RRC configuration messages.

Optionally, that the UE obtains the fifth information may be performed before step 402.

In a possible implementation, the method further includes: The UE sends capability information to the satellite, where the capability information includes at least one of the following: the UE does not support a capability of RRC reconfiguration, and the UE supports a capability of determining, based on DCI, whether to perform HARQ feedback. This may also be understood as that the UE supports the DCI override function, the UE supports the DCI override function for the at least one process or all the processes, the UE supports a function of modifying the first configuration information based on the DCI, the UE supports overriding the first configuration information based on the DCI, or the like. Optionally, that the UE sends the capability information to the satellite may be performed before step 402. In this way, the satellite learns of the capability supported by the UE and the capability not supported by the UE.

The foregoing mainly describes the solutions provided in this application from a perspective of interaction between devices. It may be understood that in the foregoing implementations, to implement the foregoing functions, each device includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the UE, the satellite, or the like may be divided into functional modules based on the foregoing method examples. For example, each functional module may be obtained through division based on a corresponding function, or two or more functions may be integrated into one processing module. The integrated module may be implemented in a form of hardware, or may be implemented in a form of software functional module. It should be noted that, in embodiments of this application, module division is an example, and is merely a logical function division. During actual implementation, another division manner may be used.

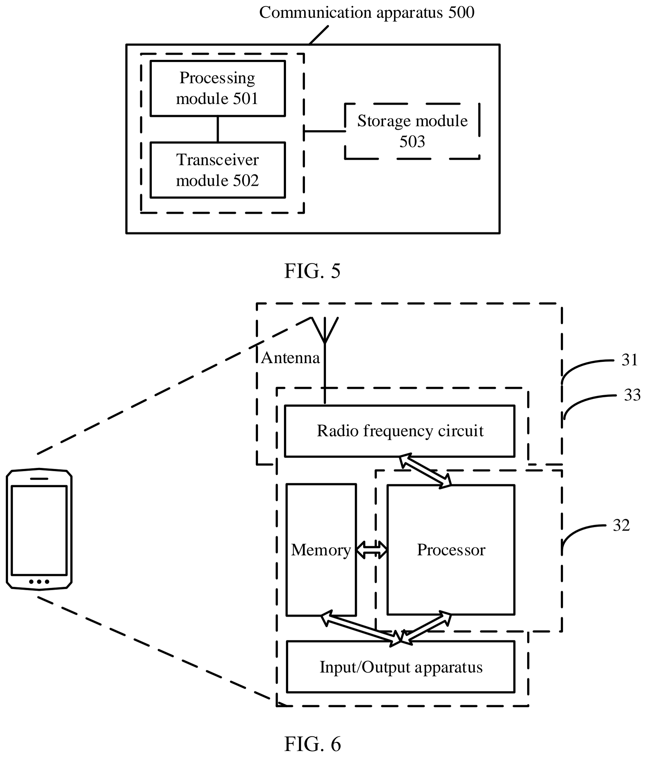

FIG. 5 is a diagram of a structure of a communication apparatus according to an embodiment of this application. The communication apparatus 500 may be used in any one of the foregoing methods. As shown in FIG. 5, the communication apparatus 500 includes a processing module 501 and a transceiver module 502. The processing module 501 may be one or more processors, and the transceiver module 502 may be a transceiver or a communication interface. The communication apparatus may be configured to implement a function of the UE or the satellite in any one of the foregoing method embodiments, or configured to implement a function of a network element in any one of the foregoing method embodiments. The network element or network function may be a network element in a hardware device, a software function running on dedicated hardware, or a virtualization function instantiated on a platform (for example, a cloud platform). Optionally, the communication apparatus 500 may further include a storage module 503, and is configured to store program code and data that are of the communication apparatus 500.

In an instance, the communication apparatus is used as the UE or a chip used in the UE, and performs steps performed by the UE or the UE in the foregoing method embodiments. The transceiver module 502 is configured to support communication with the satellite and the like. The transceiver module specifically performs a sending action and/or a receiving action performed by the UE or the UE in the method in any one of the foregoing method embodiments, for example, supports the UE in performing another process described in this specification. The processing module 501 may be configured to support the communication apparatus 500 in performing an action, other than sending and receiving, performed by the UE or the UE in the foregoing method embodiments, for example, support the UE in performing step 403 and/or another process of the technology described in this specification.

Specifically, the transceiver module 502 is configured to obtain first information, where the first information is used to determine a parsing manner of DCI. The transceiver module 502 is further configured to receive first DCI from the satellite. The processing module 501 is configured to parse the first DCI based on the first information, to determine whether to perform HARQ feedback.

In a possible implementation, that the first information is used to determine the parsing manner of the DCI includes: the first information indicates at least one of the following: the DCI is used to determine whether to perform HARQ feedback, a first indicator field in the DCI is used to determine whether to perform HARQ feedback, and a second indicator field in the DCI is used to determine whether to perform HARQ feedback. The first indicator field in the DCI is different from the second indicator field in the DCI.

In a possible implementation, the first information is predefined or preconfigured, or the first information is indicated by the satellite to the UE.

In a possible implementation, the transceiver module 502 is further configured to obtain second information, where the second information indicates that the first DCI is used by the UE to determine that HARQ feedback needs to be performed.

In a possible implementation, when parsing the first DCI based on the first information to determine whether to perform HARQ feedback, the processing module 501 is configured to: determine a size and a format of the first DCI; and determine, based on the first information and the size and the format of the first DCI, that the first DCI indicates to perform HARQ feedback.

In a possible implementation, the transceiver module 502 is further configured to obtain third information, where the third information indicates that the first DCI is used by the UE to determine that HARQ feedback does not need to be performed.

In a possible implementation, when parsing the first DCI based on the first information to determine whether to perform HARQ feedback, the processing module 501 is configured to: determine a size and a format of the first DCI; and determine, based on the first information and the size and the format of the first DCI, that the first DCI indicates not to perform HARQ feedback.

In a possible implementation, the transceiver module 502 is further configured to obtain fourth information, where the fourth information indicates that first DCI is used to modify first configuration information in the UE. The first configuration information indicates the UE to perform HARQ feedback; the first configuration information indicates the UE not to perform HARQ feedback; the first configuration information indicates the UE to perform HARQ feedback for a first process and perform HARQ feedback for a second process; the first configuration information indicates the UE to perform HARQ feedback for a first process and not to perform HARQ feedback for a second process; the first configuration information indicates the UE not to perform HARQ feedback for a first process and to perform HARQ feedback for a second process; or the first configuration information indicates the UE not to perform HARQ feedback for a first process and not to perform HARQ feedback for a second process.

In a possible implementation, when parsing the first DCI based on the first information to determine whether to perform HARQ feedback, the processing module 501 is configured to: determine a size and a format of the first DCI; parse the first DCI based on the first information and the size and the format of the first DCI, to obtain a parsing result; and update the first configuration information based on the parsing result, to obtain second configuration information.

In a possible implementation, if the first configuration information indicates the UE to perform HARQ feedback, and the parsing result indicates the UE not to perform HARQ feedback, the second configuration information indicates the UE not to perform HARQ feedback; if the first configuration information indicates the UE to perform HARQ feedback, and the parsing result indicates to override the first configuration information, the second configuration information indicates the UE not to perform HARQ feedback; if the first configuration information indicates the UE not to perform HARQ feedback, and the parsing result indicates the UE to perform HARQ feedback, the second configuration information indicates the UE to perform HARQ feedback; or if the first configuration information indicates the UE not to perform HARQ feedback, and the parsing result indicates to override the first configuration information, the second configuration information indicates the UE to perform HARQ feedback.

In a possible implementation, that the UE modifies the first configuration information based on DCI is predefined or preconfigured, or that the UE modifies the first configuration information based on DCI is indicated by the satellite to the UE.

In a possible implementation, if the first configuration information indicates the UE to perform HARQ feedback for the first process and perform HARQ feedback for the second process, and the parsing result indicates the UE not to perform HARQ feedback for the first process, the second configuration information indicates the UE not to perform HARQ feedback for the first process and to perform HARQ feedback for the second process; if the first configuration information indicates the UE to perform HARQ feedback for the first process and not to perform HARQ feedback for the second process, and the parsing result indicates the UE not to perform HARQ feedback for the first process, the second configuration information indicates the UE not to perform HARQ feedback for the first process and not to perform HARQ feedback for the second process; if the first configuration information indicates the UE not to perform HARQ feedback for the first process and to perform HARQ feedback for the second process, and the parsing result indicates the UE to perform HARQ feedback for the first process, the second configuration information indicates the UE to perform HARQ feedback for the first process and perform HARQ feedback for the second process; if the first configuration information indicates the UE not to perform HARQ feedback for the first process and not to perform HARQ feedback for the second process, and the parsing result indicates the UE to perform HARQ feedback for the first process, the second configuration information indicates the UE to perform HARQ feedback for the first process and not to perform HARQ feedback for the second process; if the first configuration information indicates the UE to perform HARQ feedback for the first process and perform HARQ feedback for the second process, and the parsing result indicates to override the first configuration information for the first process, the second configuration information indicates the UE not to perform HARQ feedback for the first process and to perform HARQ feedback for the second process; if the first configuration information indicates the UE to perform HARQ feedback for the first process and not to perform HARQ feedback for the second process, and the parsing result indicates to override the first configuration information for the first process, the second configuration information indicates the UE not to perform HARQ feedback for the first process and not to perform HARQ feedback for the second process; if the first configuration information indicates the UE not to perform HARQ feedback for the first process and to perform HARQ feedback for the second process, and the parsing result indicates to override the first configuration information for the first process, the second configuration information indicates the UE to perform HARQ feedback for the first process and perform HARQ feedback for the second process; or if the first configuration information indicates the UE not to perform HARQ feedback for the first process and not to perform HARQ feedback for the second process, and the parsing result indicates to override the first configuration information for the first process, the second configuration information indicates the UE to perform HARQ feedback for the first process and not to perform HARQ feedback for the second process.

In a possible implementation, that the UE is allowed to modify, based on DCI, configuration information about whether to perform HARQ feedback for the first process, and the UE is not allowed to modify, based on the DCI, configuration information about whether to perform HARQ feedback for the second process is predefined or preconfigured, or that the UE is allowed to modify, based on DCI, configuration information about whether to perform HARQ feedback for the first process, and the UE is not allowed to modify, based on the DCI, configuration information about whether to perform HARQ feedback for the second process is indicated by the satellite to the UE.

In a possible implementation, the transceiver module 502 is further configured to obtain fifth information, where the fifth information indicates time for which the UE parses DCI based on the first information.

In a possible implementation, the transceiver module 502 is further configured to send capability information to the satellite, where the capability information includes at least one of the following: the UE does not support a capability of RRC reconfiguration, and the UE supports a capability of determining, based on DCI, whether to perform HARQ feedback. The UE reports the capability information to the satellite, so that the satellite can learn of the capability supported by the UE and the capability not supported by the UE.

In a possible implementation, when the UE or the satellite is a chip, the transceiver module 502 may be a communication interface, a pin, a circuit, or the like. The communication interface may be configured to input to-be-processed data into a processor, and may output a processing result of the processor to the outside. During specific implementation, the communication interface may be a general-purpose input/output (general-purpose input/output, GPIO) interface, and may be connected to a plurality of peripheral devices (for example, a display (LCD), a camera (camera), a radio frequency (radio frequency, RF) module, and an antenna). The communication interface is connected to the processor through a bus.

The processing module 501 may be a processor. The processor may execute computer-executable instructions stored in the storage module, so that the chip performs the method according to any one of the foregoing embodiments.

Further, the processor may include a controller, an arithmetic unit, and a register. For example, the controller is mainly responsible for instruction decoding, and transmitting a control signal for operations corresponding to instructions. The arithmetic unit is mainly responsible for performing a fixed-point or floating-point arithmetic operation, a shift operation, a logic operation, and the like, and may also perform an address operation and address translation. The register is mainly responsible for saving a quantity of register operations, intermediate operation results, and the like that are temporarily stored during instruction execution. During specific implementation, a hardware architecture of the processor may be an ASIC architecture, a microprocessor without interlocked piped stages architecture (microprocessor without interlocked piped stages architecture, MIPS), an advanced reduced instruction set computing machine (advanced RISC machine, ARM) architecture, a second processor (network processor, NP) architecture, or the like. The processor may be a single-core or multi-core processor.

The storage module may be a storage module inside the chip, for example, a register or a cache. Alternatively, the storage module may be a storage module, for example, a ROM, another type of static storage device that can store static information and instructions, or a RAM, located outside the chip.

It should be noted that a function corresponding to each of the processor and the interface may be implemented by using a hardware design, may be implemented by using a software design, or may be implemented by a combination of software and hardware. This is not limited herein.

FIG. 6 is a diagram of a simplified structure of UE according to an embodiment of this application. For ease of understanding and illustration, in FIG. 6, for example, the UE is a mobile phone. As shown in FIG. 6, the UE includes at least one processor, and may further include a radio frequency circuit, an antenna, and an input/output apparatus. The processor may be configured to process a communication protocol and communication data, and may be further configured to control the UE, execute a software program, process data of the software program, and the like. The UE may further include a memory. The memory is mainly configured to store a software program and data. These related programs may be loaded into the memory when the communication apparatus is delivered from a factory, or may be loaded into the memory when needed later. The radio frequency circuit is mainly configured to: perform conversion between a baseband signal and a radio frequency signal, and process the radio frequency signal. The antenna is mainly configured to receive/send a radio frequency signal in an electromagnetic wave form, and the antenna is the antenna provided in embodiments of this application. The input/output apparatus, such as a touchscreen, a display, or a keyboard, is mainly configured to: receive data input by a user and output data to the user. It should be noted that some types of UE may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of electromagnetic wave through the antenna. When data is sent to the UE, the radio frequency circuit receives a radio frequency signal through the antenna, converts the radio frequency signal into a baseband signal, and outputs the baseband signal to the processor. The processor converts the baseband signal into data, and processes the data. For ease of description, only one memory and one processor are shown in FIG. 6. In an actual UE product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have receiving and sending functions may be considered as a receiving unit and a sending unit (which may also be collectively referred to as a transceiver unit) of the UE, and a processor having a processing function may be considered as a processing unit of the UE. As shown in FIG. 6, the UE includes a receiving module 31, a processing module 32, and a sending module 33. The receiving module 31 may also be referred to as a receiver, a receiving machine, a receiver circuit, or the like. The sending module 33 may also be referred to as a sender, a transmitter, a transmitter machine, a transmitter circuit, or the like. The processing module 32 may also be referred to as a processor, a processing board, a processing apparatus, or the like. For example, the processing module 32 is configured to perform a function of the UE in any one of the foregoing methods.

An embodiment of this application provides a communication apparatus. The communication apparatus includes at least one processor and a memory. The memory is configured to store a computer program or instructions, and the at least one processor is configured to execute the computer program or the instructions in the memory, so that the method corresponding to each device or network element in any one of the foregoing methods is performed.

An embodiment of this application provides a computer-readable storage medium. The computer-readable storage medium stores computer instructions. When the computer instructions are executed, the computer is enabled to perform the method in any one of the foregoing methods.

An embodiment of this application provides a computer program product. The computer program product includes computer program code. When the computer program code is run on a computer, the computer is enabled to perform the method in any one of the foregoing methods.

An embodiment of this application provides a chip. The chip is coupled to a memory, and is configured to read and execute program instructions in the memory, so that an apparatus in which the chip is located implements the method in any one of the foregoing methods.

The foregoing units described as separate parts may or may not be physically separate, and parts displayed as units may or may not be physical units, may be located in one position, or may be distributed on a plurality of network units. Some or all of the units may be selected according to an actual requirement, to achieve the objectives of the solutions in embodiments of this application. In addition, various network element units in embodiments of this application may be integrated into one processing unit, or each of the units may exist alone physically, or two or more units may be integrated into one unit. The integrated unit may be implemented in a form of hardware, or may be implemented in a form of software network element unit.

When the integrated unit is implemented in the form of software network element unit and sold or used as an independent product, the integrated unit may be stored in a computer-readable storage medium. Based on such an understanding, a part essentially contributing to the technical solutions of this application, or all or some of the technical solutions may be embodied in a form of software product. The computer software product is stored in a storage medium, and includes several instructions for instructing a computer device (which may be a personal computer, UE, a satellite, or the like) to perform all or some of the steps of the methods described in embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc. The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining first information, wherein the first information is used to determine a parsing manner of downlink control information;
receiving first downlink control information from a network device; and
parsing the first downlink control information based on the first information, to determine whether to perform hybrid automatic repeat request HARQ feedback.

2. The method according to claim 1, wherein that the first information is used to determine the parsing manner of the downlink control information comprises:
the first information indicates at least one of the following: the downlink control information is used to determine whether to perform HARQ feedback, a first indicator field in the downlink control information is used to determine whether to perform HARQ feedback, and a second indicator field in the downlink control information is used to determine whether to perform HARQ feedback, wherein
the first indicator field in the downlink control information is different from the second indicator field in the downlink control information.

3. The method according to claim 1 or 2, wherein
the first information is predefined or preconfigured; or
the first information is indicated by the network device to the terminal device.

4. The method according to any one of claims 1 to 3, wherein the method further comprises:
obtaining second information, wherein the second information indicates that the first downlink control information is used by the terminal device to determine that HARQ feedback needs to be performed.

5. The method according to claim 4, wherein parsing the first downlink control information based on the first information, to determine whether to perform HARQ feedback comprises:
determining a size and a format of the first downlink control information; and
determining, based on the first information and the size and the format of the first downlink control information, that the first downlink control information indicates to perform HARQ feedback.

6. The method according to any one of claims 1 to 3, wherein the method further comprises:
obtaining third information, wherein the third information indicates that the first downlink control information is used by the terminal device to determine that HARQ feedback does not need to be performed.

7. The method according to claim 6, wherein parsing the first downlink control information based on the first information, to determine whether to perform HARQ feedback comprises:
determining a size and a format of the first downlink control information; and
determining, based on the first information and the size and the format of the first downlink control information, that the first downlink control information indicates not to perform HARQ feedback.

8. The method according to any one of claims 1 to 3, wherein the method further comprises:
obtaining fourth information, wherein the fourth information indicates that the first downlink control information is used to modify first configuration information in the terminal device; and
the first configuration information indicates the terminal device to perform HARQ feedback;
the first configuration information indicates the terminal device not to perform HARQ feedback;
the first configuration information indicates the terminal device to perform HARQ feedback for a first process and perform HARQ feedback for a second process, wherein the first process is different from the second process;
the first configuration information indicates the terminal device to perform HARQ feedback for the first process and not to perform HARQ feedback for the second process;
the first configuration information indicates the terminal device not to perform HARQ feedback for the first process and to perform HARQ feedback for the second process; or
the first configuration information indicates the terminal device not to perform HARQ feedback for the first process and not to perform HARQ feedback for the second process.

9. The method according to claim 8, wherein parsing the first downlink control information based on the first information, to determine whether to perform HARQ feedback comprises:
determining a size and a format of the first downlink control information;
parsing the first downlink control information based on the first information and the size and the format of the first downlink control information, to obtain a parsing result; and
updating the first configuration information based on the parsing result, to obtain second configuration information.

10. The method according to claim 9, wherein
if the first configuration information indicates the terminal device to perform HARQ feedback, and the parsing result indicates the terminal device not to perform HARQ feedback, the second configuration information indicates the terminal device not to perform HARQ feedback;
if the first configuration information indicates the terminal device not to perform HARQ feedback, and the parsing result indicates the terminal device to perform HARQ feedback, the second configuration information indicates the terminal device to perform HARQ feedback;
if the first configuration information indicates the terminal device to perform HARQ feedback, and the parsing result indicates to override the first configuration information, the second configuration information indicates the terminal device not to perform HARQ feedback; or
if the first configuration information indicates the terminal device not to perform HARQ feedback, and the parsing result indicates to override the first configuration information, the second configuration information indicates the terminal device to perform HARQ feedback.

11. The method according to claim 10, wherein that the terminal device modifies the first configuration information based on downlink control information is predefined or preconfigured; or
that the terminal device modifies the first configuration information based on downlink control information is indicated by the network device to the terminal device.

12. The method according to claim 9, wherein
if the first configuration information indicates the terminal device to perform HARQ feedback for the first process and perform HARQ feedback for the second process, and the parsing result indicates the terminal device not to perform HARQ feedback for the first process, the second configuration information indicates the terminal device not to perform HARQ feedback for the first process and to perform HARQ feedback for the second process;
if the first configuration information indicates the terminal device to perform HARQ feedback for the first process and not to perform HARQ feedback for the second process, and the parsing result indicates the terminal device not to perform HARQ feedback for the first process, the second configuration information indicates the terminal device not to perform HARQ feedback for the first process and not to perform HARQ feedback for the second process;
if the first configuration information indicates the terminal device not to perform HARQ feedback for the first process and to perform HARQ feedback for the second process, and the parsing result indicates the terminal device to perform HARQ feedback for the first process, the second configuration information indicates the terminal device to perform HARQ feedback for the first process and perform HARQ feedback for the second process;
if the first configuration information indicates the terminal device not to perform HARQ feedback for the first process and not to perform HARQ feedback for the second process, and the parsing result indicates the terminal device to perform HARQ feedback for the first process, the second configuration information indicates the terminal device to perform HARQ feedback for the first process and not to perform HARQ feedback for the second process;
if the first configuration information indicates the terminal device to perform HARQ feedback for the first process and perform HARQ feedback for the second process, and the parsing result indicates to override the first configuration information for the first process, the second configuration information indicates the terminal device not to perform HARQ feedback for the first process and to perform HARQ feedback for the second process;
if the first configuration information indicates the terminal device to perform HARQ feedback for the first process and not to perform HARQ feedback for the second process, and the parsing result indicates to override the first configuration information for the first process, the second configuration information indicates the terminal device not to perform HARQ feedback for the first process and not to perform HARQ feedback for the second process;
if the first configuration information indicates the terminal device not to perform HARQ feedback for the first process and to perform HARQ feedback for the second process, and the parsing result indicates to override the first configuration information for the first process, the second configuration information indicates the terminal device to perform HARQ feedback for the first process and perform HARQ feedback for the second process; or
if the first configuration information indicates the terminal device not to perform HARQ feedback for the first process and not to perform HARQ feedback for the second process, and the parsing result indicates to override the first configuration information for the first process, the second configuration information indicates the terminal device to perform HARQ feedback for the first process and not to perform HARQ feedback for the second process.

13. The method according to claim 12, wherein that the terminal device is allowed to modify, based on downlink control information, configuration information about whether to perform HARQ feedback for the first process, and the terminal device is not allowed to modify, based on the downlink control information, configuration information about whether to perform HARQ feedback for the second process is predefined or preconfigured; or
that the terminal device is allowed to modify, based on downlink control information, configuration information about whether to perform HARQ feedback for the first process, and the terminal device is not allowed to modify, based on the downlink control information, configuration information about whether to perform HARQ feedback for the second process is indicated by the network device to the terminal device.

14. The method according to any one of claims 1 to 13, wherein the method further comprises:
obtaining fifth information, wherein the fifth information indicates time for which the terminal device parses downlink control information based on the first information.

15. The method according to any one of claims 1 to 14, wherein the method further comprises:
sending capability information to the network device, wherein the capability information comprises at least one of the following: the terminal device does not support a capability of radio resource control reconfiguration, and the terminal device supports a capability of determining, based on downlink control information, whether to perform HARQ feedback.

16. A communication method, comprising:
sending first information to a terminal device, wherein the first information is used to determine a parsing manner of downlink control information; and
sending first downlink control information to the terminal device, wherein the first downlink control information is used by the terminal device to parse the first downlink control information in the parsing manner indicated by the first information, to determine whether to perform hybrid automatic repeat request HARQ feedback.

17. The method according to claim 16, wherein that the first information is used to determine the parsing manner of the downlink control information comprises:
the first information indicates at least one of the following: the downlink control information is used to determine whether to perform HARQ feedback, a first indicator field in the downlink control information is used to determine whether to perform HARQ feedback, and a second indicator field in the downlink control information is used to determine whether to perform HARQ feedback, wherein
the first indicator field in the downlink control information is different from the second indicator field in the downlink control information.

18. The method according to claim 16 or 17, wherein the method further comprises:
sending second information to the terminal device, wherein the second information indicates that the first downlink control information is used by the terminal device to determine that HARQ feedback needs to be performed.

19. The method according to claim 16 or 17, wherein the method further comprises:
sending third information to the terminal device, wherein the third information indicates that the first downlink control information is used by the terminal device to determine that HARQ feedback does not need to be performed.

20. The method according to claim 16 or 17, wherein the method further comprises:
sending fourth information to the terminal device, wherein the fourth information indicates that the first downlink control information is used to modify first configuration information in the terminal device; and
the first configuration information indicates the terminal device to perform HARQ feedback;
the first configuration information indicates the terminal device not to perform HARQ feedback;
the first configuration information indicates the terminal device to perform HARQ feedback for a first process and perform HARQ feedback for a second process, wherein the first process is different from the second process;
the first configuration information indicates the terminal device to perform HARQ feedback for the first process and not to perform HARQ feedback for the second process;
the first configuration information indicates the terminal device not to perform HARQ feedback for the first process and to perform HARQ feedback for the second process; or
the first configuration information indicates the terminal device not to perform HARQ feedback for the first process and not to perform HARQ feedback for the second process.

21. The method according to claim 16 or 17, wherein the method further comprises:
sending fifth information to the terminal device, wherein the fifth information indicates time for which the terminal device parses downlink control information based on the first information.

22. The method according to any one of claims 16 to 21, wherein the method further comprises:
receiving capability information from the terminal device, wherein the capability information comprises at least one of the following: the terminal device does not support a capability of radio resource control reconfiguration, and the terminal device supports a capability of determining, based on downlink control information, whether to perform HARQ feedback.

23. A communication system, comprising a terminal device and a network device, wherein the terminal device is configured to perform the method according to any one of claims 1 to 15, and the network device is configured to perform the method according to any one of claims 16 to 22.

24. A communication apparatus, comprising a unit or a module configured to implement the method according to any one of claims 1 to 22.

25. A communication apparatus, wherein the communication apparatus comprises at least one processor and a memory, wherein
the memory is configured to store a computer program or instructions, and the at least one processor is configured to execute the computer program or the instructions in the memory, so that the method according to any one of claims 1 to 22 is performed.

26. A computer-readable storage medium, wherein the computer-readable storage medium comprises computer instructions, and when the computer instructions are executed, the computer is enabled to perform the method according to any one of claims 1 to 22.

27. A computer program product, wherein the computer program product comprises computer program code, and when the computer program code is run on a computer, the computer is enabled to perform the method according to any one of claims 1 to 22.
